# EUROPEAN PATENT APPLICATION

(11) **EP 4 660 733 A1**
(43) Date of publication of application: **10.12.2025**
(21) Application number: 25181376.2
(22) Date of filing: 06.06.2025
(51) Int. Cl.: G05B 23/02, G06F 40/00

(54) **UNAUTHORIZED MODIFICATION IDENTIFICATION IN ASSETS**

(30) Priority: 06.06.2024 US 202418735233
(71) Applicant: HONEYWELL INTERNATIONAL INC., Charlotte, NC 28202 (US)
(72) Inventor: SMITH, Paul, Charlotte, 28202 (US)
(74) Representative: Haseltine Lake Kempner LLP

(57) **Abstract**

Techniques for identifying unauthorized modifications made to assets within a facility are described. In an example, an asset modification indication representative of a first modification made to a first asset within a facility is received, where the asset modification indication comprises a first asset identifier associated with the asset. An operation shift report for the facility is then received, where the operation shift report is indicative of modifications made to assets within the facility. The operation shift report is then analyzed to extract a first set of modification records, wherein each of the first set of modification records comprises an asset identifier corresponding to an asset and modifications made to the asset. Thereafter, it is determined that a modification record corresponding to the first asset is not present in the first set of modification records using at least one correlation parameter. Accordingly, an investigation with respect to the first modification is initiated.

## Description

### BACKGROUND

Facilities are made to run continuously for longer durations to increase production and reduce costs involved in halting and resuming operations in such facilities. For instance, oil refineries are made to run for longer durations as stopping and resuming such refineries frequently can prove to be cost as well as labour intensive process. Similarly, iron and steel factories are made to run for longer durations to optimize costs and labour involved in stopping and resuming the operations. The high costs associated with halting and resuming operations in such facilities can be attributed to the utilization of heavy and complex assets which is both difficult to start, operate, and shut down. To ensure continuous operability of such facilities, various facility operators are employed who are tasked with handling operations of the assets being utilized in such facilities. Since such facilities are made to run continuously, the operators work in various operation shifts to handle operations of the assets.

### BRIEF DESCRIPTION OF DRAWINGS

Fig. 1 illustrates an environment for implementing an Unauthorized Modification Identification System (UMIS), in accordance with an example of the present subject matter,
Fig. 2 illustrates the environment for implementing the UMIS, in accordance with another example of the present subject matter,
Fig. 3 illustrates a schematic of the UMIS, in accordance with an example of the present subject matter,
Fig. 4 illustrates the schematic of the UMIS, in accordance with another example of the present subject matter,
Fig. 5 illustrates a method for identifying unauthorized modifications in assets within a facility, in accordance with an example of the present subject matter,
Fig. 6 illustrates the method for identifying unauthorized modifications in the assets within the facility, in accordance with another example of the present subject matter,
Fig. 7 illustrates the method for identifying unauthorized modifications in the assets within the facility, in accordance with yet another example of the present subject matter,
Fig. 8 illustrates a method for responding to unauthorized modifications made to assets within a facility, in accordance with an example of the present subject matter,
Fig. 9 illustrates a method for collection of operation shift reports for a facility, in accordance with an example of the present subject matter, and
Fig. 10 illustrates a non-transitory computer-readable medium for identifying unauthorized modifications in the assets within the facility, in accordance with an example of the present subject matter.

Throughout the drawings, identical reference numbers designate similar, but not necessarily identical, elements. The drawings provide examples and/or implementations consistent with the description; however, the description is not limited to the examples and/or implementations provided in the drawings.

### DETAILED DESCRIPTION

During an operation shift, a facility operator is responsible for various tasks, such as monitoring operational parameters associated with the assets and modifying the operational configuration of the assets by altering the operational parameters to ensure efficient operation of the assets. The facility operator is further required to record details related to such tasks and maintain an operation shift report based on such details. When the operation shift ends, the facility operator may pass the operation shift report corresponding to the operation shift to another facility operator taking over the responsibility of handling the assets during a subsequent shift. Alternatively, upon completion of the operation shift, the facility operator may upload the operation shift report to a facility server. Thereafter, the other facility operator may download the operation shift report corresponding to the previous operation shift from the facility server upon initiation of the subsequent operation shift. In this manner, different facility operators responsible for handling the operation of the assets are made aware of the modifications made to the operational configuration of the assets during different operation shifts.

There may be a situation where personnel other than the authorized facility operators may secure unauthorized access to the facility and make modifications to the operational configuration of an asset. In such situations, it may be difficult to identify the modifications made to the operational configuration as such modifications may not be captured in the operation shift report. In certain facilities, such as chemical processing plants, persistence of such modifications may cause accidents, thereby causing loss of life and property. In other facilities, such modifications may lead to deviations in the operational configuration from an optimized operational configuration, thereby adversely affecting various operations being performed within the facility.

According to examples of the present subject matter, techniques for identifying unauthorized modifications in assets within a facility are described.

In an example implementation, an asset modification indication representative of a first modification made to a first asset within a facility may be received. The asset modification indication may include a first asset identifier associated with the first asset. In an example, the first modification may have been made during an operation shift at the facility. Thereafter, an operation shift report for the facility may be received, where the operation shift report is indicative of modifications made to assets within the facility. In an example, the operation shift report may correspond to the operation shift.

The operation shift report may then be analyzed to extract a first set of modification records associated with a first set of assets, where each of the first set of modification records comprises an asset identifier corresponding to an asset and modifications made to the asset. The operation shift report may be analyzed using a natural language processing model trained using historical operation shift reports including labeled modification records associated with a plurality of assets.

Thereafter, it may be determined if a modification record corresponding to the first asset is present in the first set of modification records. In an example, the first modification record may be identified using at least one correlation parameter.

In an example, a modification record corresponding to the first asset may be absent in the first set of modification records. In such a situation, the first modification may be identified to be unauthorized. Accordingly, an investigation with respect to the first modification may be initiated.

In another example, a first modification record corresponding to the first asset may be present in the first set of modification records. In such a situation, the first modification may be correlated with the modifications included in the first modification record to generate a correlation score. The correlation score may then be compared with a confidence value to verify the authenticity of the first modification. If the correlation score is found to be below the confidence value, an investigation with respect to the first modification may be initiated. On the other hand, if the correlation score is found to be above the confidence value, a notification indicating the first modification to be authorized may be generated. In such a situation, a security related event corresponding to the first modification may be removed from a Security Operations Center (SOC) meant to monitor security related events for the facility.

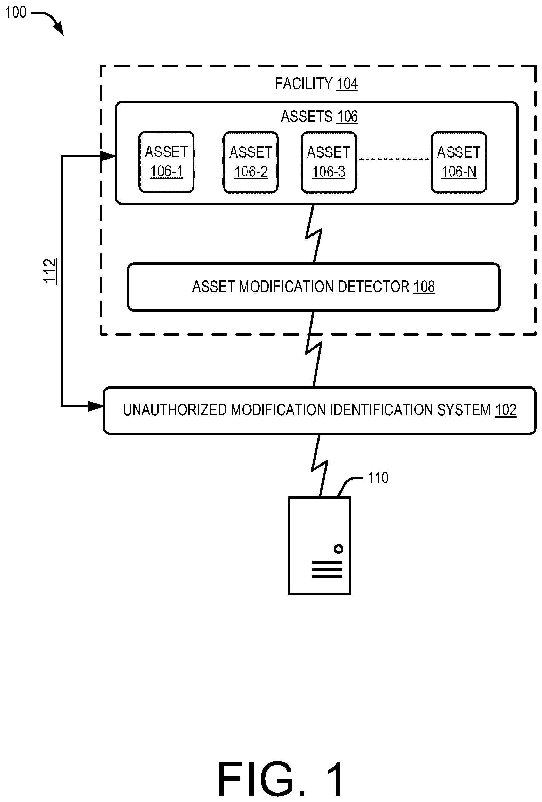

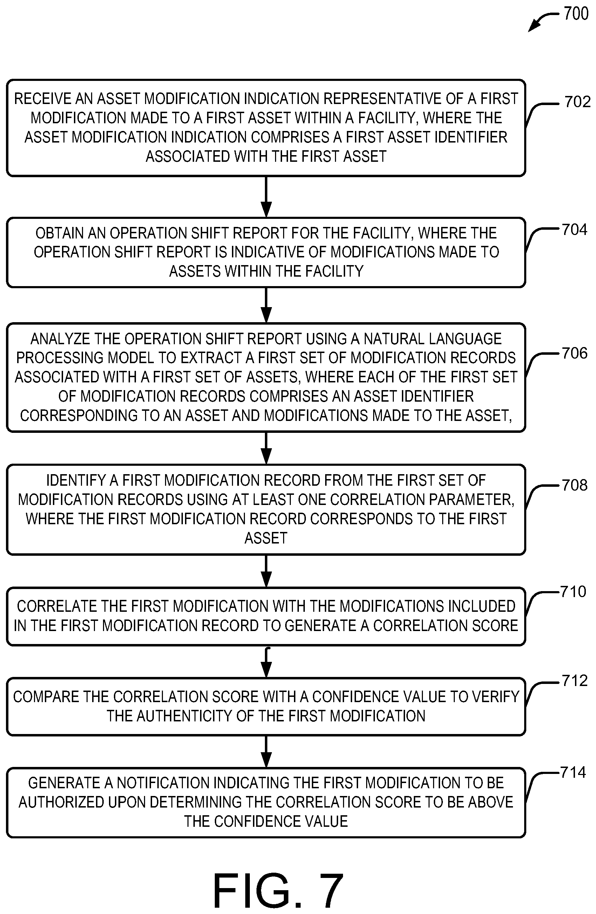

The above techniques are further described with reference to Figs. 1 to 10. It would be noted that the description and the figures merely illustrate the principles of the present subject matter along with examples described herein and would not be construed as a limitation to the present subject matter. It is thus understood that various arrangements may be devised that, although not explicitly described or shown herein, embody the principles of the present subject matter. Moreover, all statements herein reciting principles, aspects, and implementations of the present subject matter, as well as specific examples thereof, are intended to encompass equivalents thereof.

Fig.1 illustrates an environment 100 for implementing Unauthorized Modification Identification System (UMIS) 102, in accordance with an example of the present subject matter. The environment 100 may include a facility 104, where the facility 104 may have a plurality of assets 106-1, 106-2, 106-3, ..., 106-n. For the ease of reference, the plurality of assets 106-1, 106-2, 106-3, ..., 106-n has been referred to as the assets 106, hereinafter. In an example, the UMIS 102 may be configured to identify unauthorized modifications made to an asset, such as a first asset 106-1, from the plurality of assets 106.

Examples of the facility 104 may include, but are not limited to, automobile assembly facilities, electronics manufacturing facilities, pharmaceutical production facilities, food processing plants, power plants, oil refineries, natural gas processing plants, steel mills, smelting plants, cement plants, water treatment facilities, wastewater treatment plants, warehouse and distribution centres, port and shipping facilities, and hospitals. Further, examples of the assets 106 at the industrial facility 104 may vary based on a type of industrial facility 104. For instance, when the industrial facility 104 is an iron and steel factory, examples of the assets 106 may include, but are not limited to, hot coil conveyers, de-coiler machine, rotary kiln and cooler, continuous casting machine, cold box equipment, air purification vessel, roller table, ladle turret, and waste heat recovery boiler. Further, when the industrial facility 104 is a chemical factory, examples of the assets 106 may include, but are not limited to, heat exchangers, centrifugal machines, hot air generators, chemical reactor vessels, mixing tanks, and chemical storage tanks.

The environment 100 may further include an asset modification detector 108 coupled to the assets 106. In an example, the asset modification detector 108 may monitor the operations of the assets 106 and may detect modifications made to the assets 106. In an example, the asset modification detector 108 may be a Programmable Logic Controller (PLC).

The asset modification detector 108 may detect different modifications made to the assets 106. Examples of such modifications include, but are not limited to, operating parameter modifications, configuration modifications, and asset replacement. The asset modification detector 108 may detect the different modifications made to the assets 106 in different ways.

In an example, to detect the operating parameter modifications, the asset modification detector 108 may be communicatively coupled to various sensors being utilized to monitor the operations of the assets. The asset modification detector 108 may collect operating parameters of the assets from the sensors and compare the operating parameters with previously collected operating parameters. Based on the comparison, the asset modification detector 108 may detect an operating parameter modification.

Further, to detect the configuration modifications and asset replacement, the asset modification detector 108 may intercept various commands being received for asset monitoring and control. Such commands may be received from a Human Machine Interface (HMI) terminal coupled to the asset modification detector 108. If any of the intercepted commands is for modification in configuration of the assets, the asset modification detector 108 may detect a configuration modification.

Moreover, to detect the asset replacement, the asset modification detector 108 may maintain a log of asset identifiers, such as asset IP addresses, for the assets 106. Further, the asset modification detector 108 may periodically collect the updated asset identifiers for the assets 106 and compare the updated asset identifiers with the previously stored asset identifiers. Based on the comparison, the asset modification detector 108 may detect an asset replacement. For instance, if asset identifier corresponding to any asset is found to be different from the previously identified asset identifier, the asset modification detector 108 may determine that the asset has been replaced.

The environment 100 may further include a facility server 110. The facility server 110, among other information, may host operation shift reports for the facility 104, where the operation shift reports may be indicative of modifications made to assets within the facility. In an example, the operation shift reports may be prepared by facility operators during their respective operation shifts. In the example, the facility operators may upload the operator shift reports onto the facility server 110 upon conclusion of their respective shifts.

In an example, the UMIS 102 may further be controllably coupled to the assets 106. In the example, the UMIS 102 may be controllably coupled to the assets 106 via a communication network 112. The communication network 112 can be a wireless or a wired network, or a combination thereof. Further, the communication network 112 can be a collection of individual networks, interconnected with each other and functioning as a single large network. The communication network 112 may be Global System for Mobile communication (GSM) network, Universal Mobile Telecommunications System (UMTS) network, Long Term Evolution (LTE) network, personal communications service (PCS) network, Time-division multiple access (TDMA) network, Code-Division Multiple Access (CDMA) network, next-generation network (NGN), public switched telephone network (PSTN), Integrated Services Digital Network (ISDN), or a combination thereof.

In an example implementation, the asset modification detector 108 may detect a first modification made to the first asset 106-1. Upon detecting the modification, the asset modification detector 108 may transmit an asset modification indication to the UMIS 102. The asset modification indication may be representative of a first modification made to the first asset 106-1. Further, the asset modification indication may include a first asset identifier associated with the asset.

Upon receiving the asset modification indication, the UMIS 102 may access the facility server 110 and obtain an operation shift report for the facility 104. The UMIS may then analyze the operation shift report to extract a first set of modification records. In an example, the natural language processing model may be analyzed using a natural language processing model trained using historical operation shift reports including labeled modification records associated with a plurality of assets. Further, each modification record of the first set of modification records may include an asset identifier corresponding to an asset and modifications made to the asset.

The UMIS 102 may then determine if a modification record corresponding to the first asset is present in the first set of modification records. In an example, the UMIS 102 may determine if the modification record corresponding to the first asset is present in the first set of modification records using at least one correlation parameter. In the example, the correlation parameter may include at least one of the first asset identifier and a schedule of first modification.

In an example, the UMIS 102 may determine that the modification record corresponding to the first asset is not present in the first set of modification records. In such a situation, the UMIS 102 may determine the first modification to be unauthorized. The UMIS 102 may accordingly initiate an investigation with respect to the first modification.

In another example, the UMIS 102 may determine that the modification record corresponding to the first asset is present the UMIS 102. In such a situation, the UMIS 102 may identify a first modification record from the first set of modification records, where the first modification record corresponds to the first asset. The UMIS 102 may then correlate the first modification with the modifications included in the first modification record to generate a correlation score. Thereafter, the UMIS 102 may compare the correlation score with a confidence value to verify the authenticity of the first modification.

In an example, the UMIS 102 may determine the correlation score to be below the confidence value. In such a situation, the UMIS 102 may determine the first modification to be unauthorized. The UMIS 102 may accordingly initiate an investigation with respect to the first modification.

In another example, the UMIS 102 may determine the correlation score to be above the confidence value. In such a situation, the UMIS 102 may determine the first modification to be authorized. Accordingly, the UMIS 102 may remove a security related event corresponding to the first modification from the SOC meant to monitor security related events for the facility.

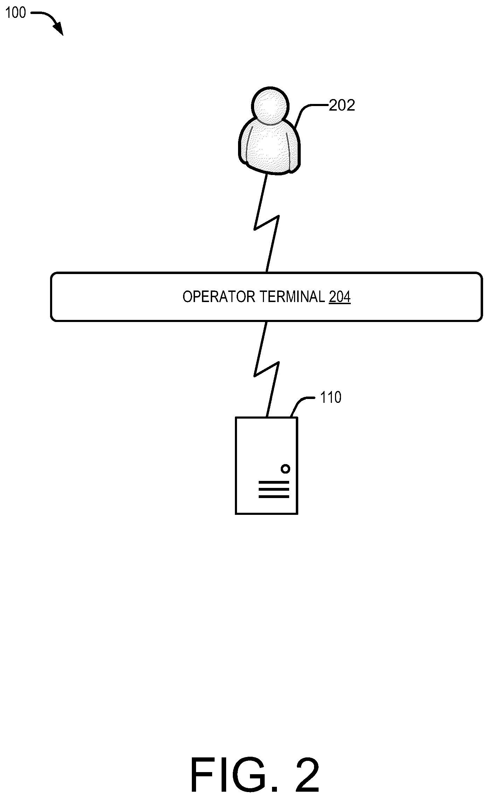

Fig. 2 illustrates the environment 200 for implementing UMIS 102, in accordance with another example of the present subject matter. The environment 100 may facilitate a facility operator 202 to provide the operation shift reports for the facility.

In an example, the environment 100 may include an operator terminal 204 that enables the facility operator 202 to provide the operation shift reports. In the example, the operator terminal 204 may be communicatively coupled to the facility server 110. The operator terminal 204 may be communicatively coupled to the facility server 110 via a network (not shown). The network can be a wireless or a wired network, or a combination thereof. Further, the network can be a collection of individual networks, interconnected with each other and functioning as a single large network. The network may be Global System for Mobile communication (GSM) network, Universal Mobile Telecommunications System (UMTS) network, Long Term Evolution (LTE) network, personal communications service (PCS) network, Time-division multiple access (TDMA) network, Code-Division Multiple Access (CDMA) network, next-generation network (NGN), public switched telephone network (PSTN), Integrated Services Digital Network (ISDN), or a combination thereof.

The operator terminal 204 may facilitate provisioning of the operation shift reports in different ways. In an example, the operator terminal 204 may allow the facility operator to provide information that constitutes an operation shift report via a User Interface (UI), during an operation shift of the facility operator. In the example, the operator terminal 204 may collate the information provided by the facility operator 202 during the operation shift to generate the operation shift report. In another example, the operator terminal 204 may allow the facility operator to upload a handwritten operation shift reports upon completion of the operation shift. In the example, the operator terminal 204 may then perform Optical Character Recognition (OCR) on the handwritten operation shift report and generate the operation shift report. The operator terminal 204 may then upload the operation shift report to the facility server 110.

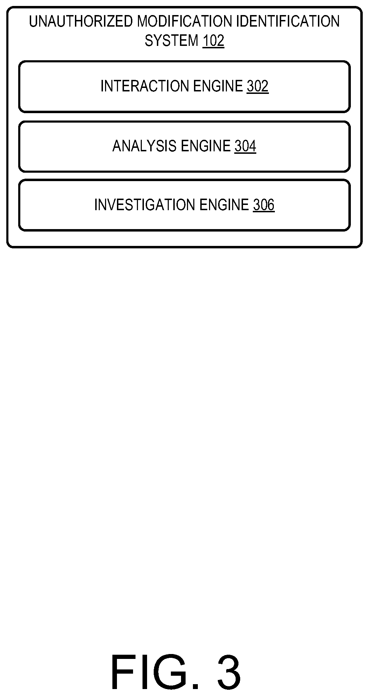

Fig. 3 illustrates a schematic of the UMIS 102, in accordance with an example of the present subject matter. As already explained, the UMIS 102 may be configured to identify unauthorized modifications made to assets within the facility 104.

The UMIS 102 may include an interaction engine 302. The interaction engine 302 may receive an asset modification indication representative of a first modification made to a first asset, such as the asset 106-1, within the facility 104. The asset modification indication may include a first asset identifier associated with the first asset. The interaction engine 302 may then obtain an operation shift report for the facility. In an example, the operation shift report may be indicative of modifications made to assets 106 within the facility 104.

The UMIS 102 may further include an analysis engine 304. The analysis engine 304 may analyze the operation shift report to extract a first set of modification records. In an example, the analysis engine 304 may analyze the operation shift report using a natural language processing model trained using historical operation shift reports including labeled modification records associated with a plurality of assets. Further, each record of the first set of modification records may include an asset identifier corresponding to an asset and modifications made to the asset.

The analysis engine 304 may then identify if the first set of modification records includes a modification record corresponding to the asset 106-1. The analysis engine 304 may identify that the first set of modification records includes the modification record corresponding to the asset 106-1 using at least one correlation parameter, such as an asset identifier for the asset 106-1 and a schedule of the first modification.

If the analysis engine 304 determines that the modification record corresponding to the asset 106-1 is not present in the first set of modification records, the analysis engine 304 may determine that the first modification is not authorized. In such a situation, the analysis engine 304 may initiate an investigation with respect to the first modification.

On the other hand, if the analysis engine 304 determines that a modification record corresponding to the asset 106-1 is present in the first set of modification records, the analysis engine 304 may identify the modification record. The analysis engine 304 may then correlate the first modification with the modifications included in the modification record corresponding to the asset 106-1 and generate a correlation score.

The UMIS 102 may further include an investigation engine 306. The investigation engine 306 may compare the correlation score with a threshold correlation value to verify the authenticity of the first modification. If the investigation engine 306 determines the correlation score to be higher than the threshold correlation value, the investigation engine 306 may generate a notification indicating the first modification to be authorized. On the other hand, if the investigation engine 306 determines the correlation score to be lower than the threshold correlation value, the investigation engine 306 may initiate an investigation with respect to the first modification. The manner in which the unauthorized modifications made to the asset are identified is further explained with reference to the forthcoming figures.

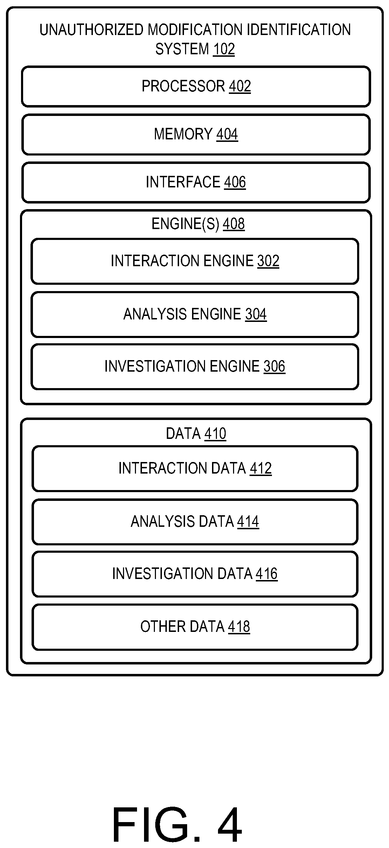

Fig. 4 illustrates the schematic of the UMIS 102, in accordance with another example of the present subject matter. As illustrated, the UMIS 102 may include a processor 402 and a memory 404 coupled to the processor 402. The functions of the various elements shown in the FIGs., including any functional blocks labelled as "processor(s)", may be provided through the use of dedicated hardware as well as hardware capable of executing instructions. When provided by a processor, the functions may be provided by a single dedicated processor, by a single shared processor, or by a plurality of individual processors, some of which may be shared. Moreover, explicit use of the term "processor" would not be construed to refer exclusively to hardware capable of executing instructions, and may implicitly include, without limitation, digital signal processor (DSP) hardware, network processor, application specific integrated circuit (ASIC), field programmable gate array (FPGA), read only memory (ROM) for storing instructions, random access memory (RAM), non-volatile storage. Other hardware, conventional and/or custom, may also be included.

The memory 404 may include any computer-readable medium including, for example, volatile memory (e.g., RAM), and/or non-volatile memory (e.g., EPROM, flash memory, etc.).

The UMIS 102 may further include an interface 406. The interface 406 may allow the connection or coupling of the alarm event mitigation system 102 with one or more other devices, through a wired (e.g., Local Area Network, i.e., LAN) connection or through a wireless connection (e.g., Bluetooth^{®}, WiFi). The interface 406 may also enable intercommunication between different logical as well as hardware components of the UMIS 102.

The UMIS 102 may further include engine(s) 408, where the engine(s) 408 may include the interaction engine 302, the analysis engine 304, and the investigation engine 306. In an example, the engine(s) 408 may be implemented as a combination of hardware and firmware or software. In examples described herein, such combinations of hardware and firmware may be implemented in several different ways. For example, the firmware for the engine may be processor executable instructions stored on a non-transitory machine-readable storage medium and the hardware for the engine may include a processing resource (for example, implemented as either a single processor or a combination of multiple processors), to execute such instructions.

In the present examples, the machine-readable storage medium may store instructions that, when executed by the processing resource, implement the functionalities of the engine. In such examples, the UMIS 102 may include the machine-readable storage medium storing the instructions and the processing resource to execute the instructions. In other examples of the present subject matter, the machine-readable storage medium may be located at a different location but accessible to the UMIS 102 and the processor 402.

The UMIS 102 may further include data 410, that serves, amongst other things, as a repository for storing data that may be fetched, processed, received, or generated by the engine(s) 408. In an example, the data 410 may include the interaction data 412, the analysis data 414, the investigation data 416, and the other data 418. In an example, the data 410 may be stored in the memory 404.

In operation, the interaction engine 302 may receive an asset modification indication representative of a first modification made to an asset, such as the asset 106-1 from the assets 106. The first modification may be one of operating parameter modification, configuration modification, and asset replacement. In an example, the asset modification indication may include a first asset identifier associated with the asset 106-1. Examples of the asset identifiers may include, but are not limited to, Internet Protocol (IP) address, Media Access Control (MAC) address, and port numbers. In the example, the asset modification indication may further include a first timestamp indicative of a schedule, such as time and date, of first modification. The interaction engine 302 may then store the asset modification indication in the interaction data 412.

In an example, the interaction engine 302 may identify at least one second asset identifier corresponding to the first asset identifier. For instance, if the asset modification indication includes the IP address for the asset 106-1, the interaction engine 302 may identify the MAC address and port numbers corresponding to the IP address for the asset 106-1. The interaction engine 302 may identify the at least one second identifier based on a lookup table including different identifiers for each of the assets 106. The lookup table may either be stored on the UMIS 102 or on any other device accessible to the UMIS 102, such as the facility server 110. The interaction engine 302 may then store the at least one second identifier along with the first identifier in the interaction data 412.

The interaction engine 302 may then obtain an operation shift report for the facility, where the operation shift report is indicative of modifications made to the assets 106. The interaction engine 302 may obtain the operation shift report from the facility server 110. In an example, the operation shift report may correspond to an operation shift during which the first modification was made to the asset. The interaction engine 302 may then store the operation shift report in the interaction data 412.

Subsequently, the analysis engine 304 may retrieve the operation shift report from the interaction data 412. The analysis engine 304 may then analyze the operation shift report to extract a first set of modification records associated with a first set of assets from the assets 106. Each modification record from the first set of modification records includes an asset identifier corresponding to an asset and modifications made to the asset. In an example, the analysis engine 304 may analyze the operation shift report using a natural language processing model. In the example, the natural language processing model may be trained using historical operation shift reports including labeled modification records associated with a plurality of assets. The analysis engine 304 may then store the first set of modification records in the analysis data 414.

The analysis engine 304 may then determine if the first set of modification records include a modification record corresponding to the asset 106-1. The analysis engine 304 may determine if the first set of modification records includes the modification record corresponding to the asset 106-1 using at least one correlation parameter.

In an example, the at least one correlation parameter may be the first asset identifier. Thus, the analysis engine 304 may determine the presence of the modification record corresponding to the asset 106-1 in the first set of modification records using the first identifier. In the example, the analysis engine 304 may also obtain the at least one second asset identifier corresponding to the first asset identifier and utilize the at least one second asset identifier while determining the presence of modification record corresponding to the asset 106-1.

In another example, the at least one correlation parameter may be the first timestamp. In the example, the analysis engine 304 may determine if the first set of modification records includes a modification record corresponding to the asset 106-1 using the first timestamp.

In an example, the analysis engine 304 may determine that the modification record corresponding to the asset 106-1 is not present in the first set of modification records. In such a situation, the investigation engine 306 may ascertain that the first modification hasn't been logged into the operations shift report for the facility. Thus, the investigation engine 306 may determine the first modification to be unauthorized. In such a situation, the investigation engine 306 may initiate an investigation into the first modification. In an example, upon determining the first modification to be unauthorized, the investigation engine 306 may identify a category of the first modification. If the category of the first modification is found to be either of the operating parameter modification or the configuration modification, the investigation engine 306 may initiate a configuration restoration operation to roll back the first modification.

In another example, the analysis engine 304 may determine that a modification record corresponding to the asset 106-1 is present in the first set of modification records. In the example, the analysis engine 304 may identify a first modification record corresponding to the asset 106-1, from the first set of modification records.

The analysis engine 304 may then correlate the first modification with the modifications included in the first modification record to generate a correlation score. In an illustrative example, the correlation score may be generated on a scale of '1' to '10' and may be generated based on an extent of presence of the first modification in the modifications included in the first modification record. In the example, presence of a higher proportion of the first modification in the modifications included in the first modification record may translate into a higher confidence score. The analysis engine 304 may store the correlation score in the analysis data 414.

Subsequently, the investigation engine 306 may compare the correlation score with a confidence value to verify the authenticity of the first modification. If the correlation score is determined to be higher than the confidence value, the investigation engine 306 may determine the first modification to be authorized. For instance, in the illustrative example described above, the confidence value may be set at '6'. Thus, if the correlation score is determined to be higher than '6', the investigation engine 306 may determine the first modification to be authorized. In such a situation, the investigation engine 306 may remove a security related event corresponding to the first modification from the SOC meant to monitor security related events for the facility.

On the other hand, if the correlation score is determined to be higher than the confidence value, the investigation engine 306 may determine the first modification to be unauthorized. In such a situation, the investigation engine 306 may initiate an investigation with respect to the first modification. In an example, upon determining the first modification to be unauthorized, the investigation engine 306 may identify the category of the first modification. If the category of the first modification is found to be either of the operating parameter modification or the configuration modification, the investigation engine 306 may initiate the configuration restoration operation to roll back the first modification.

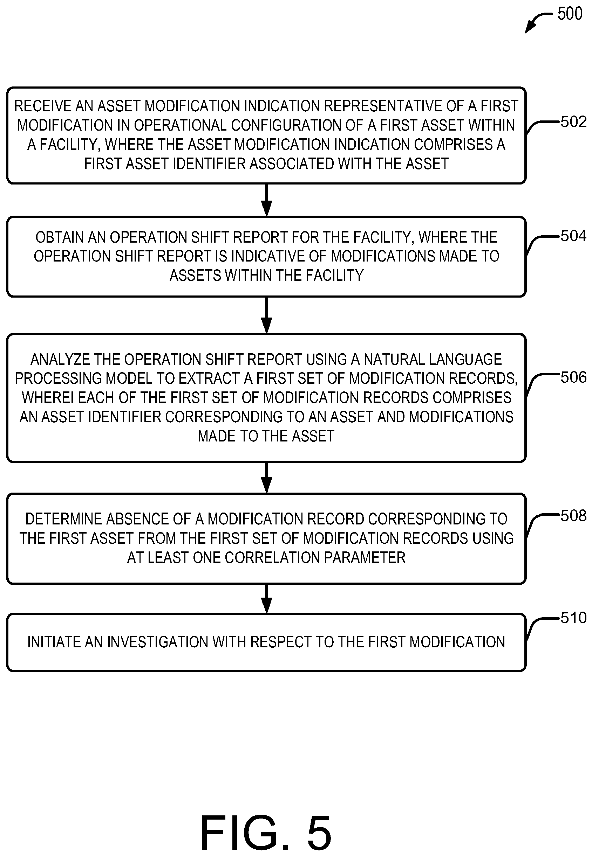

Figs. 5, 6, and 7 illustrate methods 500, 600, and 700 for identifying unauthorized modifications made to assets within a facility, in accordance with examples of the present subject matter. The order in which the methods are described is not intended to be construed as a limitation, and any number of the described method blocks may be combined in any order to implement the methods, or an alternative method. Further, the methods 500, 600, and 700 may be implemented by processing resource or computing device(s) through any suitable hardware, non-transitory machine-readable instructions, or combination thereof.

It may also be understood that methods 500, 600, and 700 may be performed by programmed computing devices, such as the UMIS 102. Furthermore, the methods 500, 600, and 700 may be executed based on instructions stored in a non-transitory computer readable medium, as will be readily understood. The non-transitory computer readable medium may include, for example, digital memories, magnetic storage media, such as one or more magnetic disks and magnetic tapes, hard drives, or optically readable digital data storage media. The methods 500, 600, and 700 are described below with reference to the UMIS 102, as described above; other suitable systems for the execution of these methods may also be utilized. Additionally, implementation of the method is not limited to such examples.

At block 502, an asset modification indication may be received, where the asset modification indication is representative of a first modification made to a first asset within a facility. The asset modification indication may include a first asset identifier associated with the asset. The asset modification indication may further include a first timestamp indicative of a schedule, such as date and time, of the first modification. In an example, the asset modification indication may be received during an operation shift at the facility.

At block 504, an operation shift report for the facility may be obtained, where the operation shift report is indicative of modifications made to assets within the facility. In an example, the operation shift report may correspond to the operation shift.

At block 506, the operation shift report may be analyzed to extract a first set of modification records. Each of the first set of modification records comprises an asset identifier corresponding to an asset and modifications made to the asset. In an example, the operation shift report may be analyzed using a natural language processing model trained using historical operation shift reports including labeled modification records associated with a plurality of assets.

At block 508, it may be determined that a modification record corresponding to the first asset is not present in the first set of modification records. In an example, absence of the modification record corresponding to the first asset may be determined using at least one correlation parameter. In the example, the at least one correlation parameter may include, but is not limited to, the first identifier and the first timestamp.

At block 510, an investigation with respect to the first modification may be initiated. In an example, in addition to the initiation of the investigation with respect to the first modification, a category of the first modification may also be determined. If the category of the first modification is determined to be one of operating parameter modification or configuration modification, a configuration restoration operation may be initialized to roll back the first modification.

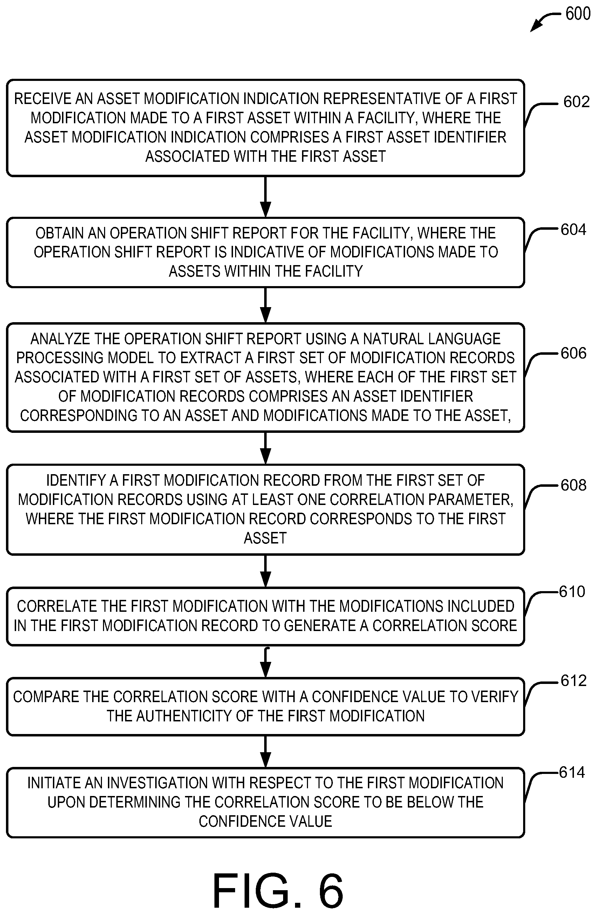

In fig. 6, at block 602, an asset modification indication may be received, where the asset modification indication is representative of a first modification made to a first asset within a facility. The asset modification indication may include a first asset identifier associated with the asset. The asset modification indication may further include a first timestamp indicative of a schedule, such as date and time, of the first modification. In an example, the asset modification indication may be received during an operation shift at the facility.

At block 604, an operation shift report for the facility may be obtained, where the operation shift report is indicative of modifications made to assets within the facility. In an example, the operation shift report may correspond to the operation shift.

At block 606, the operation shift report may be analyzed to extract a first set of modification records. Each of the first set of modification records comprises an asset identifier corresponding to an asset and modifications made to the asset. In an example, the operation shift report may be analyzed using a natural language processing model trained using historical operation shift reports including labeled modification records associated with a plurality of assets.

At block 608, a first modification record corresponding to the first asset may be identified from amongst the first set of modification records. In an example, the first modification record corresponding to the first asset may be identified using at least one correlation parameter. In the example, the at least one correlation parameter may include, but is not limited to, the first identifier and the first timestamp.

At block 610, the first modification may be correlated with the modifications included in the first modification record to generate a correlation score.

At block 612, the correlation score may be compared with a confidence value to verify the authenticity of the first modification.

At block 614, an investigation with respect to the first modification may be initiated. The investigation with respect to the first modification may be initiated upon determining the correlation score to be below the confidence value. In an example, in addition to the initiation of the investigation with respect to the first modification, a category of the first modification may also be determined. If the category of the first modification is determined to be one of operating parameter modification or configuration modification, a configuration restoration operation may be initialized to roll back the first modification.

At block 702, an asset modification indication may be received, where the asset modification indication is representative of a first modification made to a first asset within a facility. The asset modification indication may include a first asset identifier associated with the asset. The asset modification indication may further include a first timestamp indicative of a schedule, such as date and time, of the first modification. In an example, the asset modification indication may be received during an operation shift at the facility.

At block 704, an operation shift report for the facility may be obtained, where the operation shift report is indicative of modifications made to assets within the facility. In an example, the operation shift report may correspond to the operation shift.

At block 706, the operation shift report may be analyzed to extract a first set of modification records. Each of the first set of modification records comprises an asset identifier corresponding to an asset and modifications made to the asset. In an example, the operation shift report may be analyzed using a natural language processing model trained using historical operation shift reports including labeled modification records associated with a plurality of assets.

At block 708, a first modification record corresponding to the first asset may be identified from amongst the first set of modification records. In an example, the first modification record corresponding to the first asset may be identified using at least one correlation parameter. In the example, the at least one correlation parameter may include, but is not limited to, the first identifier and the first timestamp.

At block 710, the first modification may be correlated with the modifications included in the first modification record to generate a correlation score.

At block 712, the correlation score may be compared with a confidence value to verify the authenticity of the first modification.

At block 714, a notification indicating the first modification to be authorized may be generated. In an example, the notification indicating the first modification to be authorized may be generated upon determining the correlation score to be above the confidence value.

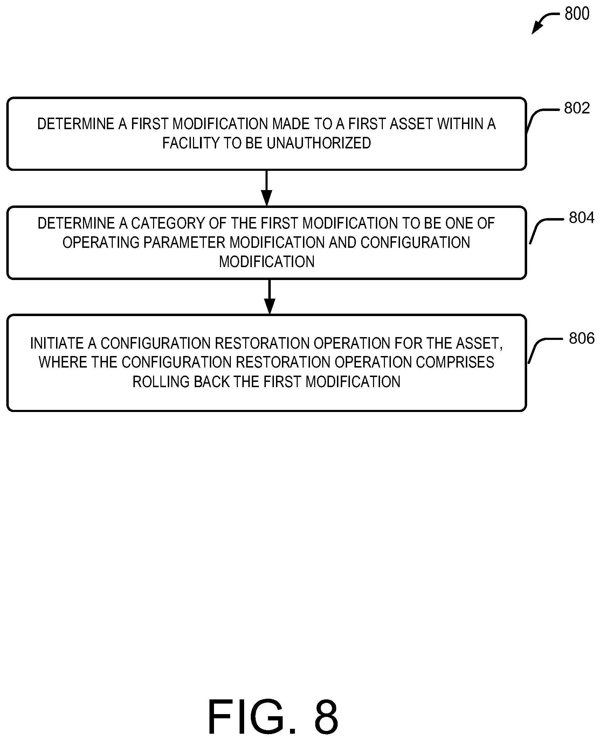

Fig. 8 illustrates a method 800 for responding to unauthorized modifications made to assets within a facility, in accordance with an example of the present subject matter. The order in which the method is performed is not intended to be construed as a limitation, and any number of the described method blocks may be combined in any order to implement the methods, or an alternative method. Further, the method 800 may be implemented by processing resource or computing device(s) through any suitable hardware, non-transitory machine-readable instructions, or combination thereof.

It may also be understood that method 800 may be performed by programmed computing devices, such as the UMIS 102. Furthermore, the method 800 may be executed based on instructions stored in a non-transitory computer readable medium, as will be readily understood. The non-transitory computer readable medium may include, for example, digital memories, magnetic storage media, such as one or more magnetic disks and magnetic tapes, hard drives, or optically readable digital data storage media. The method 800 is described below with reference to the UMIS 102, as described above; other suitable systems for the execution of these methods may also be utilized. Additionally, implementation of the method is not limited to such examples.

At block 802, a first modification made to a first asset within a facility may be determined to be unauthorized. In an example, the first modification may be determined to be unauthorized by the investigation engine 306.

At block 804, a category of the first modification may be determined to be one of operating parameter modification and configuration modification. In an example, the category of the first modification may be determined by the investigation engine 306.

At block 806, a configuration restoration operation for the asset may be initialized. The configuration restoration operation may be initialized to roll back the first modification. In an example, the configuration restoration operation may be initialized by the investigation engine 306.

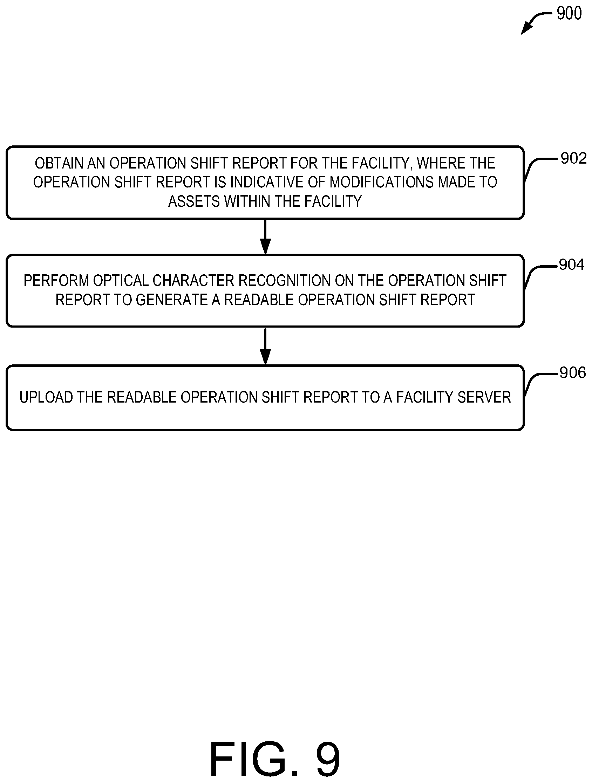

Fig. 9 illustrates a method 900 for collection of operation shift reports for a facility, in accordance with an example of the present subject matter. The order in which the method is performed is not intended to be construed as a limitation, and any number of the described method blocks may be combined in any order to implement the methods, or an alternative method. Further, the method 900 may be implemented by processing resource or computing device(s) through any suitable hardware, non-transitory machine-readable instructions, or combination thereof.

It may also be understood that method 900 may be performed by programmed computing devices, such as the operator terminal 204 or the UMIS 102. Furthermore, the method 800 may be executed based on instructions stored in a non-transitory computer readable medium, as will be readily understood. The non-transitory computer readable medium may include, for example, digital memories, magnetic storage media, such as one or more magnetic disks and magnetic tapes, hard drives, or optically readable digital data storage media. The method 800 is described below with reference to the UMIS 102, as described above; other suitable systems for the execution of these methods may also be utilized. Additionally, implementation of the method is not limited to such examples.

At block 902, an operation shift report for the facility may be obtained, where the operation shift report is indicative of modifications made to the assets within the facility. In an example, the operation shift report may be a handwritten report and may have been prepared by a facility operator during his operation shift.

At block 904, Optical Character Recognition (OCR) may be performed on the operation shift report to generate a readable operation shift report. At block 906, the readable operation shift report may be uploaded to a facility server.

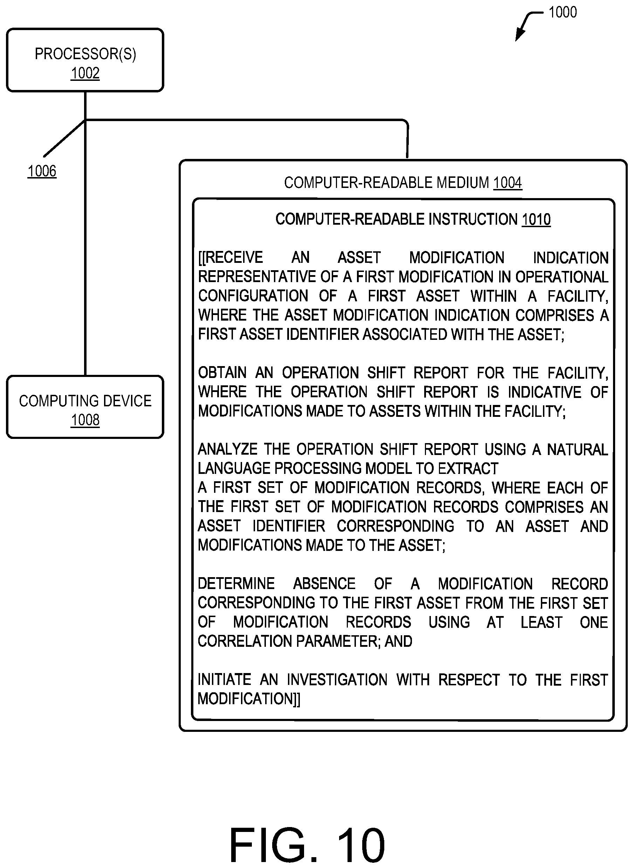

Fig. 10 illustrates a non-transitory computer-readable medium for identifying unauthorized modifications in the assets within the facility, in accordance with an example of the present subject matter.

In an example, the computing environment 1000 includes processor 1002 communicatively coupled to a non-transitory computer readable medium 1004 through communication link 1006. In an example implementation, the computing environment 1000 may be for example, the UMIS 102. In an example, the processor 1002 may have one or more processing resources for fetching and executing computer-readable instructions from the non-transitory computer readable medium 1004. The processor 1002 and the non-transitory computer readable medium 1004 may be implemented, for example, in the UMIS 102.

The non-transitory computer readable medium 1004 may be, for example, an internal memory device or an external memory. In an example implementation, the communication link 1006 may be a network communication link, or other communication links, such as a PCI (Peripheral component interconnect) Express, USB-C (Universal Serial Bus Type-C) interfaces, I2C (Inter-Integrated Circuit) interfaces, etc. In an example implementation, the non-transitory computer readable medium 1004 includes a set of computer readable instructions 1010 which may be accessed by the processor 1002 through the communication link 1006 and subsequently executed for identifying unauthorized modification of the assets within the facility. The processor(s) 1002 and the non-transitory computer readable medium 1004 may also be communicatively coupled to a computing device 1008 over the network.

Referring to Fig. 10, in an example, the non-transitory computer readable medium 1004 includes computer readable instructions 1010 that cause the processor 1002 to receive an asset modification indication representative of a first modification made to a first asset within the facility. In an example, the asset modification indication may be received during an operation shift at the facility. The asset modification indication may include a first asset identifier associated with the asset. Examples of asset identifiers may include, but are not limited to, IP address, MAC address, and port numbers. The asset modification indication may further include a first timestamp, such as date and time, indicative of a schedule of the first modification.

The instructions 1010 may cause the processor 1002 to obtain an operation shift report for the facility, where the operation shift report is indicative of modifications made to assets within the facility. In an example, the operation shift report may correspond to the operation shift. Thereafter, the instructions 1010 may cause the processor 1002 to analyze the operation shift report to extract a first set of modification records. Each of the first set of modification records may include an asset identifier corresponding to an asset and modifications made to the asset. In an example, the instructions 1010 may cause the processor 1002 to analyze the operation shift report using a natural language processing model trained using historical operation shift reports including labeled modification records associated with a plurality of assets.

The instructions 1010 may then cause the processor 1002 to determine absence of a modification record corresponding to the first asset in the first set of modification records. In an example, the instructions 1010 may cause the processor 1002 to determine the absence of the modification record corresponding to the first asset using at least one correlation parameter. The at least one correlation parameter may include the first asset identifier and the first timestamp.

In an example, upon determining the absence of the modification record corresponding to the first asset, the instructions 1010 may cause the processor to identify at least one second asset identifier corresponding to the first asset identifier. For instance, if the asset modification indication includes the IP address for the first asset, the instructions 1010 may cause the processor 1002 to identify the MAC address and port numbers corresponding to the IP address for the first asset. In the example, the instructions 1010 may cause the processor 1002 to ascertain the absence of the modification record corresponding to the first asset using the at least one second asset identifier.

Subsequently, the instructions 1010 may cause the processor 1002 to initiate an investigation with respect to the first modification. In an example, the instructions 1010 may cause the processor 1002 to transmit a notification the first modification to be unauthorized to the SOC meant to monitor security related events for the facility.

In an example, the first modification may include at least one of the operating parameter modification and the configuration modification. In the example, the instructions 1010 may cause the processor 1002 to initiate a configuration restoration operation to roll back the first modification.

Although examples of the present subject matter have been described in language specific to methods and/or structural features, it is to be understood that the present subject matter is not limited to the specific methods or features described. Rather, the methods and specific features are disclosed and explained as examples of the present subject matter.

## Claims

1. A method comprising:
receiving an asset modification indication representative of a first modification made to a first asset within a facility, wherein the asset modification indication comprises a first asset identifier associated with the first asset;
obtaining an operation shift report for the facility, wherein the operation shift report is indicative of modifications made to assets within the facility;
analyzing the operation shift report using a natural language processing model to extract a first set of modification records associated with a first set of assets, wherein each of the first set of modification records comprises an asset identifier corresponding to an asset and modifications made to the asset, and the natural language processing model is trained using historical operation shift reports including labeled modification records associated with a plurality of assets;
identifying a first modification record in the first set of modification records using at least one correlation parameter, wherein the first modification record corresponds to the first asset;
correlating the first modification with the modifications included in the first modification record to generate a correlation score;
comparing the correlation score with a confidence value to verify the authenticity of the first modification; and
initiating an investigation with respect to the first modification upon determining the correlation score to be below the confidence value.

2. The method of claim 1, wherein the at least one correlation parameter comprises at least one of the first asset identifier and a schedule of the first modification.

3. The method of claim 2, further comprising:
obtaining at least one second asset identifier corresponding to the first asset identifier; and
utilizing the at least one second asset identifier to identify the first modification record.

4. The method of claim 1, wherein the asset modification indication is received during an operation shift at the facility and the operation shift report corresponds to the operation shift.

5. The method of claim 1, wherein the first modification comprises a modification in operational configuration of the asset.

6. The method of claim 5, further comprising initiating a configuration restoration operation for the asset, wherein the configuration restoration operation comprises rolling back the first modification.

7. The method of claim 6, wherein initiating the configuration restoration operation comprises transmitting a notification indicating the first modification to be unauthorized to a Security Operations Center, SOC, meant to monitor security related events for the facility.

8. An unauthorized modification identification system, UMIS, comprising:
an interaction engine to:
receive an asset modification indication representative of a first modification made to a first asset within a facility, wherein the asset modification indication comprises a first asset identifier associated with the asset; and
obtain an operation shift report for the facility, wherein the operation shift report is indicative of modifications made to assets within the facility;
an analysis engine coupled to the interaction engine to:
analyze the operation shift report using a natural language processing model to extract a first set of modification records, wherein each of the first set of modification records comprises an asset identifier corresponding to an asset and modifications made to the asset, and the natural language processing model is trained using historical operation shift reports including labeled modification records associated with a plurality of assets; and
identify a first modification record from the first set of modification records using at least one correlation parameter, wherein the first modification record corresponds to the first asset;
correlating the first modification with the modifications included in the first modification record to generate a correlation score; and an investigation engine coupled to the analysis engine to:
compare the correlation score with a confidence value to verify the authenticity of the first modification; and
generate a notification indicating the first modification to be authorized upon determining the correlation score to be above the confidence value.

9. The UMIS of claim 8, wherein the first modification comprises a modification in operational configuration of the asset.

10. The UMIS of claim 9, wherein the asset modification indication is received during an operation shift at the facility and the operation shift report corresponds to the operation shift.

11. The UMIS of claim 8, wherein the investigation engine is to transmit the notification indicating the first modification to be authorized to a Security Operations Center, SOC, meant to monitor security related events for the facility.

12. A non-transitory computer readable medium comprising computer-readable instructions that when executed cause a processing resource of a computing device to:
receive an asset modification indication representative of a first modification made to a first asset within a facility, wherein the asset modification indication comprises a first asset identifier associated with the asset;
obtain an operation shift report for the facility, wherein the operation shift report is indicative of modifications made to assets within the facility;
analyze the operation shift report using a natural language processing model to extract a first set of modification records, wherein each of the first set of modification records comprises an asset identifier corresponding to an asset and modifications made to the asset, and the natural language processing model is trained using historical operation shift reports including labeled modification records associated with a plurality of assets;
determine absence of a modification record corresponding to the first asset in the first set of modification records using at least one correlation parameter;
initiate an investigation with respect to the first modification.

13. The non-transitory computer readable medium of claim 12, wherein the instructions further cause the processing resource to transmit a notification indicating the first modification to be unauthorized to a Security Operations Center (SOC) meant to monitor security related events for the facility.

14. The non-transitory computer readable medium of claim 13, wherein the at least one correlation parameter comprises at least one of the first asset identifier and a schedule of the first modification.

15. The non-transitory computer readable medium of claim 14, wherein to determine absence of the modification record corresponding to the first asset, the instructions cause the processing resource to:
obtain at least one second asset identifier corresponding to the first asset identifier; and
utilize the at least one second asset identifier to determine absence of the modification record corresponding to the first asset in the first set of modification records.
